(19) Europäisches Patentamt
European Patent Office
Office européen des brevets

(11) **EP 2 050 324 B1**

(12) **FASCICULE DE BREVET EUROPEEN**

(45) Date de publication et mention
de la délivrance du brevet:
**07.07.2010 Bulletin 2010/27**

(51) Int Cl.:
***A01C 7/20*** *(2006.01)*  ***A01C 15/00*** *(2006.01)*

(21) Numéro de dépôt: **08166459.1**

(22) Date de dépôt: **13.10.2008**

(54) **Appareil agricole avec un dispositif d'accès escamotable**

Landwirtschaftliches Gerät mit einer einziehbaren Zugangsvorrichtung

Agricultural apparatus with a retractable access device

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **15.10.2007 FR 0758321**

(43) Date de publication de la demande:
**22.04.2009 Bulletin 2009/17**

(73) Titulaire: **KUHN S.A.**
**67700 Saverne (FR)**

(72) Inventeur: **Audigie, Jean-Charles**
**67330, BOUXWILLER (FR)**

(56) Documents cités:
**EP-A- 1 514 465      DE-A1- 19 607 618**
**FR-A- 2 831 387       US-A1- 2003 110 996**
**US-A1- 2004 025 766**

**Description**

La présente invention se rapporte au domaine technique général du machinisme agricole. Elle se rapporte plus particulièrement à un appareil agricole comportant un châssis, des outils de travail répartis sur le châssis suivant un écartement défini et réglable entre un écartement minimum et un écartement maximum, une trémie de stockage disposée sur ledit châssis et un dispositif d'accès à la trémie de stockage, chaque outil de travail ayant un encombrement en largeur et comportant au moins un dispositif de mise en terre. Le domaine d'application de l'invention est notamment dans les semoirs ou distributeurs de précision, par exemple les semoirs de précision monograine.

Un tel appareil agricole est connu de l'homme du métier par l'intermédiaire du prospectus **MONOSEM NG Plus 3 Extend** de la société RIBOULEAU avec la mention Réf. 90150 FR - 09/06. Il s'agit d'un semoir de précision monograine à écartements variables. Il comporte un châssis, six outils de travail répartis sur le châssis suivant un écartement défini et réglable entre un écartement minimum de 45 cm et un écartement maximum de 80 cm. Chaque outil de travail comporte une trémie individuelle constituant la réserve de graines et un dispositif de mise en terre. Chaque outil de travail présente un certain encombrement en largeur, en profondeur et en hauteur. Le semoir comporte également une trémie de stockage constituant une réserve de matière disposée à l'avant sur le châssis.

Un autre semoir avec les caractéristiques du préamble de la revendication 1 est connu par l'intermédiaire de DE 196 07 618.

Pour accéder à la trémie de stockage et notamment au couvercle, le semoir est équipé d'un dispositif d'accès présentant une passerelle qui s'étend le long de la trémie de stockage. La passerelle consiste en une plate-forme prévue pour le chargement manuel et/ou le nivellement de la matière dans la trémie de stockage. Cette passerelle est disposée au-dessus des parallélogrammes déformables des outils de travail. Grâce au parallélogramme déformable, l'outil de travail respectif est libre en hauteur et peut suivre les dénivellations du sol en restant parallèle au sol. Pour que le dégagement en hauteur de l'outil de travail soit suffisant, la passerelle s'étend à une hauteur importante par rapport au sol. Ce semoir donne la possibilité de semer différentes espèces de graines, grâce à l'écartement réglable entre les outils de travail. L'écartement étant adapté en fonction de l'espèce de graines. Ainsi pour le semis de betteraves, il est courant d'appliquer un écartement de 45 ou 50 cm tandis que pour du maïs l'écartement privilégié est de 75 ou 80 cm. L'accès à la trémie de stockage est possible quel que soit l'écartement réglé du semoir.

Ainsi, pour atteindre le couvercle de la trémie en toute sécurité, un marchepied et une main courante sont aménagés sur la passerelle. Le marchepied s'étend sur le côté, dans le prolongement de la passerelle. Il pivote autour d'un axe sensiblement horizontal et sensiblement parallèle à la direction d'avance pour permettre l'accès à la passerelle. Dans cette position ouverte, le marchepied s'étend au-delà de l'encombrement en largeur du semoir. Ainsi, lorsque le semoir est au travail, le marchepied doit être replié sur la passerelle. L'accès latéral avec le marchepied contraint la passerelle et la main courante à s'étendre tout le long de la trémie de stockage. Un tel dispositif d'accès, composé d'une passerelle, d'un marchepied et d'une main courante, est donc encombrant et conditionne la taille et la forme de la trémie de stockage. Ce dispositif d'accès grève le poids et le coût de l'appareil agricole.

La présente invention a pour but de remédier aux inconvénients de l'état de la technique. Elle a notamment pour objet de proposer un dispositif d'accès à la trémie de stockage simple et moins encombrant.

A cet effet, une importante caractéristique de l'invention consiste en ce que ledit dispositif d'accès consiste en au moins une plaque formant un marchepied d'une certaine largeur, ledit dispositif d'accès s'étend entre une position ouverte qui permet l'accès à la trémie de stockage et une position repliée, ledit dispositif d'accès reste sensiblement dans l'encombrement dudit appareil agricole et que ledit dispositif d'accès s'étend entre deux outils de travail voisins dans sa position ouverte. Le dispositif d'accès selon l'invention est donc simple, peu encombrant et facile à manipuler.

D'une manière avantageuse, le dispositif d'accès s'étend à l'arrière du châssis. Le dispositif d'accès s'étend avantageusement, dans la position ouverte, entre deux outils de travail voisins. La position ouverte du dispositif d'accès permet le passage de l'utilisateur jusqu'à la trémie de stockage.

Selon une autre caractéristique de l'invention, lorsque la différence entre l'écartement entre les outils de travail et la largeur d'un outil de travail est inférieure à la largeur dudit dispositif d'accès, ledit dispositif d'accès s'étend dans la position repliée. Ainsi, lorsque l'appareil agricole est configuré avec un écartement réduit entre les outils de travail et que l'utilisateur souhaite accéder à la trémie de stockage, il commandera préalablement l'écartement des outils de travail pour pivoter le dispositif d'accès dans sa position ouverte.

D'autres caractéristiques de l'invention, à considérer séparément ou dans toutes leurs combinaisons possibles, apparaîtront dans la description suivante des exemples de réalisation non limitatifs de l'invention représentés sur les dessins annexés sur lesquels :

- la **figure 1** représente une vue générale isométrique d'un appareil agricole équipé d'un dispositif d'accès dans une position ouverte conforme à l'invention,
- la **figure 2** représente une vue générale isométrique d'un appareil agricole équipé du dispositif d'accès dans une position repliée conforme à l'invention,

- la **figure 3** représente une vue de dessus de la figure 1,
- la **figure 4** représente une vue de côté de l'appareil agricole.

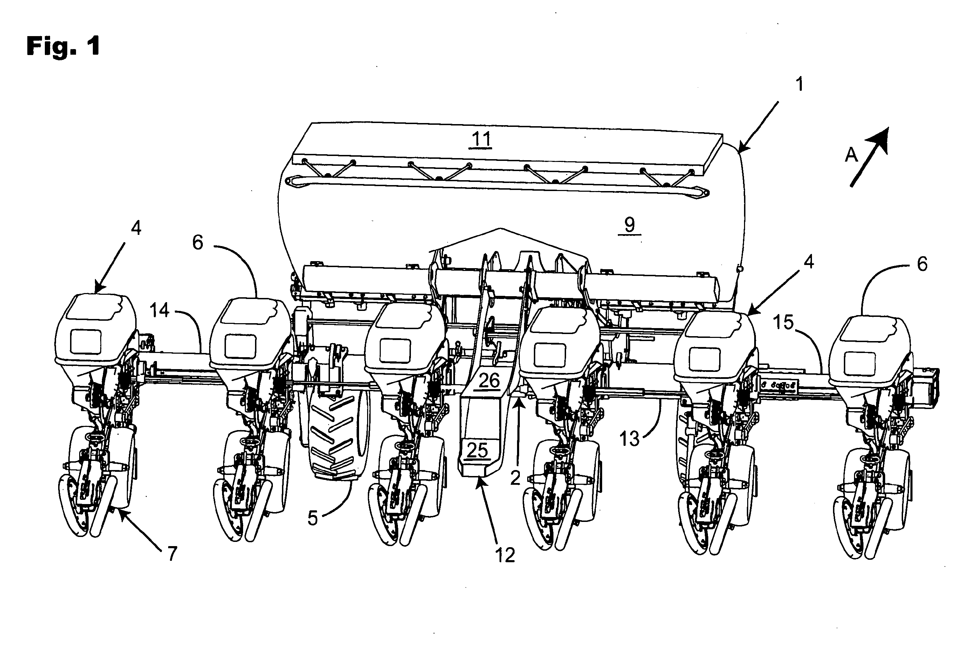

La figure 1 représente un exemple de réalisation d'un appareil agricole (1) selon l'invention. L'appareil agricole (1) est déplacé, au travail et au transport, par un tracteur (non représenté) suivant une direction et un sens d'avance indiqué par la flèche (A). L'appareil agricole (1) comporte un châssis (2) muni d'un cadre d'attelage (3) permettant sa liaison au tracteur. Le châssis (2) est disposé sensiblement horizontalement et sensiblement perpendiculairement à la direction d'avance (A). L'appareil agricole (1) comporte également des outils de travail (4) qui s'étendent à l'arrière du châssis (2) et qui sont répartis avantageusement à intervalles réguliers sur le châssis (2). Le châssis (2) supporte également des roues (5) destinées à s'appuyer sur le sol et des mécanismes d'entraînement de la distribution. Cet appareil agricole (1) peut distribuer des graines et/ou des matières sous forme de granulés et/ou de poudre au moyen des outils de travail (4). Les graines ou la matière sont avantageusement stockées dans une trémie (6, 9).

L'appareil agricole (1) représenté sur les figures est un semoir monograine. Il est équipé de six outils de travail (4). Un tel semoir assure un semis individualisé de chacune des graines et selon des rangées bien déterminées. Chaque outil de travail (4) est monté sur le châssis (2), de manière connue, au moyen d'un parallélogramme déformable respectif. De ce fait, l'outil de travail (4) est libre en hauteur et peut suivre fidèlement les dénivellations du sol en restant parallèle au sol. Chaque outil de travail (4) possède une trémie individuelle (6) constituant une réserve de graines, une distribution et au moins un dispositif de mise en terre (7, 10). La distribution permet d'extraire une à une, les graines de la trémie (6) et de les distribuer à intervalles constants dans la ligne de semis. Le dispositif de mise en terre (7) crée un sillon à une profondeur déterminée pour y placer la graine et la recouvrir de terre. Chaque outil de travail (4) comporte encore une roue de jauge pour le contrôle de la profondeur de semis et un dispositif de plombage permettant le rappui des graines dans le sillon. Chacun peut aussi être équipé d'un dispositif chasse débris à l'avant.

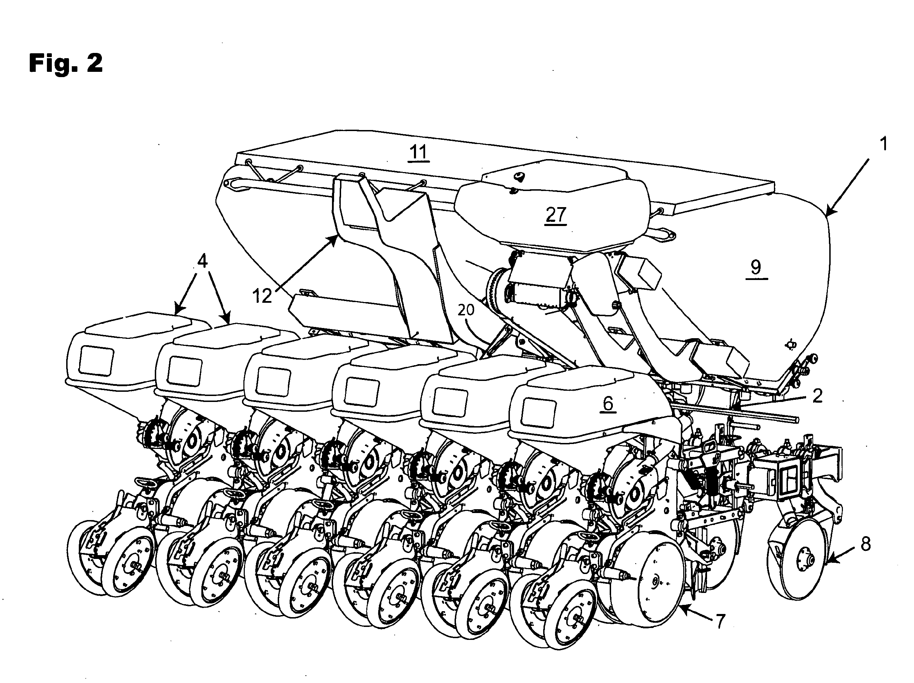

L'appareil agricole (1), représenté à la figure 2, est équipé d'un système de fertilisation (8) composé d'au moins une trémie de stockage (9) et d'enfouisseurs (10). Les enfouisseurs (10) ne sont pas représentés sur la figure 1. L'adaptation d'un système de fertilisation (8) sur l'appareil agricole (1) du type semoir monograine permet de réaliser le semis et l'apport d'engrais en un seul passage. Le système de fertilisation (8) est placé à l'avant. Pour que l'engrais soit placé au voisinage des graines, l'enfouisseur (10) est décalé latéralement par rapport à l'outil de travail (4). La trémie de stockage (9) est avantageusement une trémie centralisée de stockage de matière comme de l'engrais. L'engrais contenu dans ladite trémie (9) est réparti au moyen d'un système de dosage, par exemple à cannelures. Le système de dosage alimente les enfouisseurs (10) qui déposent l'engrais à côté de la ligne de semis.

Selon un exemple de réalisation non représenté, le système de fertilisation se compose de plusieurs trémies de stockage dont chacune alimente deux enfouisseurs.

La trémie de stockage (9) est solidaire dudit châssis (2) et est disposée transversalement par rapport à la direction d'avance (A). Elle comporte, de manière connue, une partie supérieure à contour sensiblement rectangulaire et une partie inférieure en forme approximative de deux pyramides renversées accolées. La partie supérieure présente une ouverture pour son chargement. Pour éviter l'introduction d'impuretés ou de projections dans la trémie de stockage (9), sa partie supérieure est protégée par un couvercle (11). La trémie de stockage (9) étant disposée en hauteur, notamment sur le châssis (2), un dispositif d'accès (12) est prévu pour accéder au couvercle (11). D'une manière avantageuse, la trémie de stockage (9) est une trémie centralisée. Elle alimente l'ensemble des enfouisseurs (10) via des organes de distribution respectifs. Selon l'exemple de réalisation de la figure 2, la trémie de stockage (9) présente une largeur sensiblement égale à la largeur du châssis. La largeur du châssis (2) étant conditionnée par les dispositions routières en vigueur.

Selon un autre exemple de réalisation non représenté, la trémie de stockage a une capacité de stockage réduite. Sa largeur par rapport au châssis est réduite. Elle est, de préférence, disposée de manière centrale sur le châssis. Sa partie supérieure décrit un contour sensiblement rectangulaire et sa partie inférieure une forme approximative d'une seule pyramide renversée.

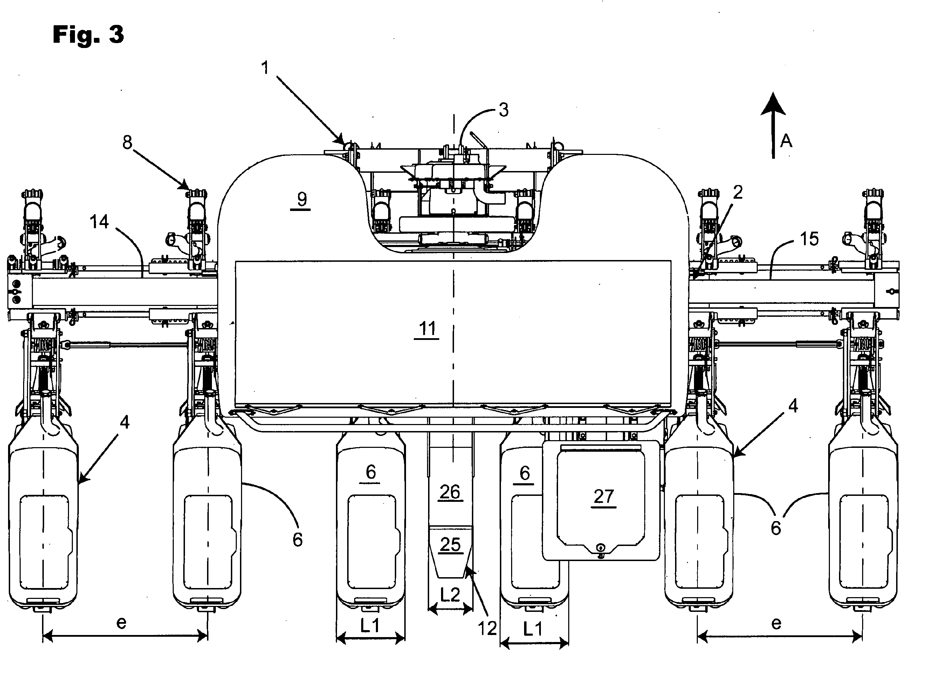

Un tel semoir monograine est utilisé pour implanter différents types de graines dans le sol. L'écartement (e) entre les outils de travail (4) est adapté en fonction de l'espèce de graine à implanter. Les outils de travail (4) sont répartis sur le châssis (2) suivant un écartement (e) défini et réglable entre un écartement minimum et un écartement maximum. Les figures 1 et 3 présentent l'appareil agricole (1) avec des outils de travail (4) répartis sur le châssis (2) suivant un écartement maximum. La figure 2 représente, pour sa part, les outils de travail (4) avec un écartement réduit. La largeur de travail de l'appareil agricole (1) est conditionnée par l'écartement (e) réglé entre les outils de travail (4). Cet écartement (e) peut varier entre un écartement minimum voisin de 45 cm et un écartement maximum de 80 cm. Selon la figure 3 représentant une vue de dessus, l'écartement (e) correspond à la distance séparant deux outils de travail (4) directement voisins. La distance est mesurée par rapport au plan médian de l'outil de travail (4). D'une manière générale, les outils de travail (4) montés sur un appareil agricole (1) sont identiques.

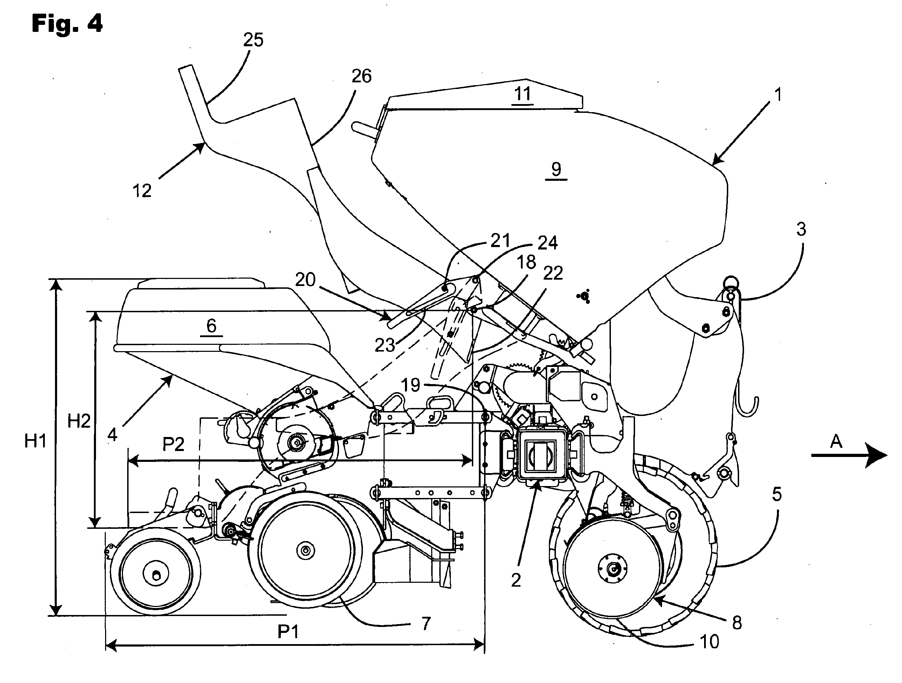

A la lumière des figures 3 et 4, on remarque qu'un outil de travail (4) occupe un certain espace à l'arrière du châssis (2). L'outil de travail (4) présente une largeur (L1), une hauteur (H1) et une profondeur (P1). Dans l'exemple de la figure 3, l'encombrement en largeur (L1) de l'outil de travail (4) correspond essentiellement à la largeur de sa trémie individuelle (6). La largeur est mesurée sensiblement perpendiculairement à la direction d'avance (A). La hauteur (H1) de l'outil de travail (4) correspond à la hauteur de la trémie individuelle (6) additionnée à la hauteur du dispositif de mise en terre (7). L'encombrement en profondeur (P1) est donné par la profondeur du parallélogramme déformable additionnée à la profondeur du dispositif de mise en terre (7). La profondeur est mesurée sensiblement dans la direction d'avance (A).

D'une manière connue et représentée sur la figure 1, le châssis (2) comporte une poutre centrale (13) et de part et d'autre au moins une extension coulissante (14, 15). Le châssis (2) peut passer d'un encombrement minimum à un encombrement maximum et inversement par coulissement des extensions (14, 15) dans la poutre centrale (13). Au moins un vérin (non représenté) assure le déplacement latéral des outils de travail (4) avec les extensions (14, 15). L'encombrement en largeur est défini en fonction de l'écartement (e) entre les outils de travail (4). Le(les) vérin(s) étant commandé(s) depuis la cabine du tracteur par un dispositif de commande pneumatique, électrique ou hydraulique. Le châssis (2) comporte une section polygonale par exemple carrée, rectangulaire ou en H. Une telle section empêche une rotation entre l'extension coulissante (14, 15) et la poutre centrale (13). Dans l'exemple de réalisation, il s'agit d'un unique vérin comportant un corps et une tige. Le vérin est, de préférence, intégré dans le châssis (2) creux. Le corps est lié à la première extension (14) et la tige est liée à la deuxième extension (15). Le châssis (2) décrit est un châssis télescopique. Un tel châssis télescopique est connu de l'homme du métier.

Pour faciliter le réglage de l'écartement (e) entre les outils de travail (4), on prévoit l'utilisation d'un châssis télescopique indexable. Ce châssis télescopique indexable permet un réglage de l'écartement (e) par palier par exemple de 5 cm. Ce réglage se fait au moyen d'index et de butées. Le vérin s'allonge ou se raccourcit en emmenant les extensions coulissantes (14, 15) pour arriver à l'écartement (e) défini. Un tel châssis télescopique indexable est également connu par l'homme du métier.

Selon une caractéristique importante de la présente invention, le dispositif d'accès (12) consiste en au moins une plaque formant un marchepied avec une largeur (L2), ledit dispositif d'accès (12) s'étend entre une position ouverte qui permet l'accès à la trémie de stockage (9) et une position repliée, ledit dispositif d'accès (12) reste sensiblement dans l'encombrement dudit appareil agricole (1).

Etant composé uniquement d'un marchepied, le dispositif d'accès (12) selon l'invention est simple, peu encombrant et facile à manipuler. Il s'étend à l'arrière dudit châssis (2) compte tenu de la direction d'avance (A). Le dispositif d'accès (12) est lié audit châssis (2) au moyen d'une première articulation (18) d'axe sensiblement horizontal et sensiblement perpendiculaire à la direction d'avance (A). Le dispositif d'accès (12) utilise, dans sa position ouverte, un espace présentant une largeur (L2), une profondeur (P2) et une hauteur (H2). La profondeur (P2) est la distance, prise dans la direction d'avance (A), entre la première articulation et l'extrémité arrière du dispositif d'accès (12). On remarque que la profondeur (P2) est plus petite que la profondeur (P1) de l'outil de travail (4). Le dispositif d'accès (12) ne s'étend pas au-delà de l'encombrement en longueur de l'appareil agricole (1) dans la position ouverte comme dans la position repliée. Le parallélogramme déformable de l'outil de travail (4) est articulé sur le châssis (2) via une deuxième articulation (19) d'axe sensiblement horizontal et transversale à la direction d'avance (A). La première articulation (18) est disposée sensiblement au-dessus et sensiblement derrière la deuxième articulation (19) compte tenu de la direction d'avance (A). L'encombrement (P1) correspond à la distance entre la deuxième articulation (19) et l'extrémité arrière du dispositif de mise en terre (7) de l'outil de travail (4).

Selon une autre caractéristique importante de l'invention, le dispositif d'accès (12) s'étend entre deux outils de travail (4) voisins dans sa position ouverte. On remarque que le dispositif d'accès (12) s'intègre dans le gabarit de l'appareil agricole (1) quelle que soit sa position ouverte ou repliée. Le dispositif d'accès (12) ne s'étend pas au-delà de l'encombrement en largeur de l'appareil agricole (1).

D'une manière particulièrement avantageuse, le dispositif d'accès (12) est avantageusement dégagé lorsqu'il n'y a pas suffisamment d'espace entre deux outils de travail (4) voisins ; c'est-à-dire lorsque l'espace entre les outils de travail (4), ne permet pas de recevoir un dispositif d'accès (12) d'une largeur (L2). En pratique, le dispositif d'accès (12) est alors pivoté dans sa position repliée pour permettre l'utilisation de l'appareil agricole (1) avec un écartement (e) réduit entre les outils de travail (4). Lorsque la différence entre l'écartement (e) et la largeur (L1) de l'outil de travail (4) est inférieure à la largeur (L2) du dispositif d'accès (12), c'est-à-dire lorsque :

$$(L2) \leq \left[ (e) - 2 \times \frac{(L1)}{2} \right] \qquad \text{ou} \qquad (L2) \leq [(e) - (L1)],$$

le dispositif d'accès (12) s'étend dans sa position repliée.

Pour ne pas détériorer le dispositif d'accès (12) ni les outils de travail (4) avoisinants, lorsque la différence entre l'écartement (e) et la largeur (L1) de l'outil de travail (4) est sensiblement égale à la largeur (L2) du dispositif d'accès (12), le dispositif d'accès (12) est également escamoté dans sa position repliée.

On peut donc en déduire que le dispositif d'accès (12) s'étend dans sa position ouverte seulement lorsque la différence entre l'écartement (e) et la largeur (L1) de l'outil de travail est strictement supérieure à la largeur (L2) du dispositif d'accès (12), c'est-à-dire lorsque :

$$(L2) \succ \left[ (e) - 2 \times \frac{(L1)}{2} \right] \qquad \text{ou} \qquad (L2) \succ \left[ (e) - (L1) \right].$$

Les formules énoncées ci-dessus reposent sur l'hypothèse que la largeur (L1) des deux outils de travail voisins est identique.

Dans la pratique, le dispositif d'accès (12) s'étend dans sa position ouverte permettant l'accès à la trémie de stockage (9) lorsque l'écartement (e) entre les outils de travail (4) est suffisant. Le dispositif d'accès (12) est dégagé dans la position repliée lorsque l'écartement (e) entre les outils de travail (4) est réduit. Lorsque le dispositif d'accès (12) est replié et que l'utilisateur veut accéder à la trémie de stockage (9) pour son chargement, il faudra préalablement augmenter l'écartement (e) entre les outils de travail (4) pour permettre au dispositif d'accès (12) de passer à la position ouverte. Pour cela, l'utilisateur commande l'extension du vérin pour augmenter l'écartement (e) entre les outils de travail (4). Le dispositif d'accès (12) peut alors être pivoté dans sa position ouverte et permettre l'accès à la trémie de stockage (9), notamment au couvercle (11). Lorsque la trémie de stockage (9) est chargée, le dispositif d'accès (12) est pivoté vers le haut dans sa position repliée. L'utilisateur commande alors la rétraction du vérin pour revenir à l'écartement (e) défini, réduit entre les outils de travail (4), depuis la cabine du tracteur.

A la lumière de la figure 4, on peut voir que le dispositif d'accès (12) s'étend, dans sa position repliée, quelque peu au-dessus du couvercle (11) de la trémie de stockage (9). Ceci permet notamment à l'utilisateur de s'assurer de la position du dispositif d'accès (12) depuis la cabine du tracteur. Afin de prévenir toute détérioration d'un équipement de l'appareil agricole (1), ce dernier est équipé d'une sécurité. Cette sécurité est active lorsque le dispositif d'accès (12) s'étend dans sa position ouverte. Dans cette position, la sécurité n'autorise pas la rétraction du vérin et donc la réduction de l'écartement (e) entre les outils de travail (4). La sécurité peut être du type mécanique. Elle est de préférence du type hydraulique. La sécurité comprend notamment une vanne au niveau du dispositif de commande du vérin. Cette vanne bloque la rétraction du vérin lorsque le dispositif d'accès (12) est ouvert. Dans l'exemple de réalisation d'un vérin du type à double effet, c'est la petite chambre qui permet la rétraction du vérin. La vanne est donc implantée dans le circuit d'alimentation de la petite chambre du vérin. Cette vanne se ferme automatiquement lorsque le dispositif d'accès (12) s'étend dans la position ouverte. A l'inverse, la vanne est ouverte lorsque le dispositif d'accès (12) est replié.

La figure 4 représente l'appareil agricole (1) selon une vue de côté. Le dispositif d'accès (12) dans sa position repliée est représenté en traits continus et le dispositif d'accès (12) dans sa position ouverte est représenté en traits discontinus. Depuis la position ouverte, le dispositif d'accès (12) s'escamote vers le haut autour de la première articulation (18) pour atteindre la position repliée. Dans cette position repliée, le dispositif d'accès (12) s'étend sensiblement au-dessus des outils de travail (4). La rotation du dispositif d'accès (12) autour de la première articulation (18) est limitée dans les deux sens respectivement par une butée haute (21) et par une butée basse (22). La butée haute (21) limite la rotation vers le haut lors du passage vers la position repliée. Avec cette butée haute (21), le dispositif d'accès (12) ne heurte pas la trémie de stockage (9) lors du pivotement. Le châssis (2) comporte, à cet effet, un levier de verrouillage (20) avec une rainure (23) dans laquelle la butée haute (21) est amenée à se déplacer. D'une manière avantageuse, la butée haute (21) permet le verrouillage du dispositif d'accès (12) dans sa position repliée. Ainsi, la partie haute de la rainure (23) comporte une encoche. L'encoche est destinée à recevoir la butée haute (21) ce qui permet le verrouillage du dispositif d'accès (12). Le levier (20) est articulé sur le châssis (2) via une troisième articulation (24) d'axe sensiblement horizontal et perpendiculaire à la direction d'avance (A). Cette troisième articulation (24) est disposée sensiblement au-dessus et à la verticale de la première articulation (18). L'axe de la troisième articulation (24) est sensiblement parallèle à l'axe de la première articulation (18).

D'après les figures et particulièrement la figure 4, le dispositif d'accès (12) est composé d'une première marche (25) et d'une deuxième marche (26). La première marche (25) permet l'accès à la deuxième marche (26). La première marche (25) est celle qui est la plus près du sol. Lorsque l'utilisateur monte sur la deuxième marche (26), l'accès à la trémie de stockage (9) est possible dans de bonnes conditions, que ce soit pour manipuler le couvercle (11) ou pour charger la trémie (9) avec des sacs. La butée basse (22) est positionnée de manière à limiter la rotation du dispositif d'accès (12) vers le bas lors du passage à la position ouverte. Grâce à cette butée basse (22) qui s'appuie contre le châssis (2), les première et deuxième marches (25, 26) s'étendent sensiblement parallèlement au sol. La position de la première articulation (18) définie la hauteur de la première marche (25) par rapport au sol.

Selon les figures 1 à 3, le dispositif d'accès (12) s'étend de manière centrale, dans le voisinage du plan vertical médian de l'appareil agricole (1). La position centrale du dispositif d'accès (12) permet l'ouverture et la fermeture du couvercle (11) ainsi qu'un accès de chaque côté de la trémie de stockage (9) pour niveler les engrais. La boîte de vitesse de l'appareil agricole (1) présente également une position centrale. Cette boîte de vitesse permet d'adapter la vitesse de la distribution à la vitesse d'avance de l'appareil agricole (1) et donc de déposer les graines avec un écartement constant. Les roues (5) entraînent la boîte de vitesse qui transmet le mouvement aux outils de travail (4). Le dispositif d'accès (12) s'étend derrière et au-dessus de la boîte de vitesse. Dans la position repliée du dispositif d'accès (12), la boîte de vitesse est accessible. A la lumière de la figure 3, on remarque que la largeur (L2) du dispositif d'accès (12) est inférieure à la largeur (L1) de la trémie individuelle (6).

Dans un exemple de réalisation non représenté, l'appareil agricole (1) est un semoir à trémie centrale. Dans ce cas, c'est la trémie de stockage (9) qui alimente directement chaque outil de travail (4) au niveau du dispositif de mise en terre (7). Les outils de travail (4) ne sont alors pas équipés de trémie individuelle (6) respectives. La trémie de stockage (9) étant chargée avec des graines, l'engrais pour le système de fertilisation (8) est alors contenu dans une autre trémie. Un semoir à trémie centrale n'est généralement pas équipé d'un système de fertilisation (8).

L'appareil agricole (1) permet également l'intégration d'un distributeur de microgranulés. Un tel distributeur est généralement utilisé pour localiser à proximité de la ligne de semis, de l'insecticide, de l'hélicide ou de l'herbicide. Le distributeur comporte selon le type soit des multi-trémies permettant de distribuer les microgranulés sur deux rangs ou soit une seule trémie supplémentaire (27) centralisée qui alimente l'ensemble des rangs ou outils de travail (4). Dans le cas de multi-trémies, elles sont réparties de part et d'autre du plan médian de l'appareil agricole (1). Dans le cas d'une trémie supplémentaire (27) centralisée comme représentée sur les figures 2 et 3, elle s'étend d'un côté du plan médian de l'appareil agricole (1). Le distributeur de microgranulés est disposé à l'arrière de la trémie de stockage (9).

Sur les figures, l'écartement (e) entre les différents outils de travail (4) est régulier. Il n'est pas nécessaire que tous les outils de travail (4) soient équidistants les uns des autres. Une répartition irrégulière des outils de travail (4) sur le châssis (2) en fonction des exigences propres à une culture ou à un terrain fait également partie de l'invention.

Selon un autre exemple de réalisation, l'appareil agricole (1) comporte deux dispositifs d'accès (12). Un dispositif d'accès (12) étant monté de chaque côté du plan vertical médian. Une telle configuration avec deux dispositifs d'accès (12) est privilégiée lorsqu'un outil de travail supplémentaire est monté de manière centrale sur le châssis (2).

L'appareil agricole (1) qui vient d'être décrit, n'est qu'un exemple de réalisation et d'utilisation qui ne saurait en aucun cas limiter le domaine de protection défini par les revendications suivantes. Différentes modifications restent possibles, notamment en ce qui concerne la constitution des drivers éléments ou par substitution d'équivalents techniques.

Il est tout à fait possible de prévoir un nombre différent de six outils de travail répartis sur le châssis. Un châssis comportant sept, huit ou davantage d'outils de travail fait aussi partie du domaine de protection de l'invention. L'encombrement minimum et l'encombrement maximum sont alors modifiés.

## Revendications

1. Appareil agricole (1) comportant un châssis (2), des outils de travail (4) répartis sur le châssis (2) suivant un écartement (e) défini et réglable entre un écartement minimum et un écartement maximum, une trémie de stockage (9) disposée sur ledit châssis (2) et un dispositif d'accès (12) à la trémie de stockage (9), chaque outil de travail (4) ayant un encombrement en largeur (L1) et comportant au moins un dispositif de mise en terre (7, 10), ledit dispositif d'accès (12) consiste en au moins une plaque formant un marchepied avec une largeur (L2), ledit dispositif d'accès (12) s'étend entre une position ouverte qui permet l'accès à la trémie de stockage (9) et une position repliée, ledit dispositif d'accès (12) reste sensiblement dans l'encombrement dudit appareil agricole (1) et **caractérisé en ce que** ledit dispositif d'accès (12) s'étend entre deux outils de travail (4) voisins dans sa position ouverte.

2. Appareil agricole selon la revendication 1, *caractérisé en ce que* ledit dispositif d'accès (12) s'étend à l'arrière dudit châssis (2) compte tenu de la direction d'avance (A) et est lié audit châssis (2) au moyen d'une première articulation (18) d'axe sensiblement horizontal et perpendiculaire à la direction d'avance (A).

3. Appareil agricole selon la revendication 1 ou 2, *caractérisé en ce que* lorsque la différence entre l'écartement (e) et la largeur (L1) d'un outil de travail (4) est inférieure à la largeur (L2) dudit dispositif d'accès (12), ledit dispositif d'accès (12) s'étend dans la position repliée.

4. Appareil agricole selon l'une quelconque des revendications 1 à 3, *caractérisé en ce* que dans la position repliée, ledit dispositif d'accès (12) est verrouillé et s'étend sensiblement au-dessus desdits outils de travail (4). 5. Appareil agricole selon la revendication 1 ou 2, *caractérisé en ce* que lorsque la différence entre l'écartement (e) et la largeur (L1) de l'outil de travail (4) est supérieure à la largeur (L2) dudit dispositif d'accès (12), le dispositif d'accès (12) s'étend dans sa position ouverte et sensiblement entre deux outils de travail (4) voisins. 6. Appareil agricole selon l'une quelconque des revendications 1 à 5, *caractérisé en ce que* le réglage de l'écartement (e) entre lesdits outils de travail (4) est réalisé au moyen d'au moins un vérin. 7. Appareil agricole selon la revendication 6, *caractérisé en ce* **qu'**il comporte une sécurité qui bloque la rétraction dudit(desdits) vérin(s) lorsque le dispositif d'accès (12) est dans la position ouverte. 8. Appareil agricole selon l'une quelconque des revendications 1 à 7, *caractérisé en ce que* ladite largeur (L2) dudit dispositif d'accès (12) est inférieure à la largeur (L1) d'un outil de travail (4). 9. Appareil agricole selon l'une quelconque des revendications 1 à 8, *caractérisé en ce que* pour accéder à la trémie de stockage (9) lorsque ledit dispositif d'accès (12) est dans la position repliée, ledit(lesdits) vérin(s) est(sont) étendu(s) pour augmenter l'écartement (e) entre lesdits outils de travail (4) puis ledit dispositif d'accès (12) est pivoté dans sa position ouverte. 10. Appareil agricole selon l'une quelconque des revendications 1 à 9, *caractérisé en ce* **qu'**il s'agit d'un semoir.

## Claims

1. Agricultural apparatus (1) comprising a chassis (2), working tools (4) distributed on the chassis (2) following a distance (e) defined and adjustable between a minimum distance and a maximum distance, a storing hopper (9) arranged on the said chassis (2) and an access device (12) to the storing hopper (9), each working tool (4) occupying a width (L1) and comprising at least one planting device (7, 10), the said access device (12) consists of at least one plate forming a foot-board with a width (L2), the said access device (12) extends between an open position, which allows access to the storing hopper (9) and a folded position, the said access device (12) remains substantially in the space occupied by the said agricultural apparatus (1) and *characterized in* **that** the said access device (12) extends between two adjacent working tools (4) in its open position.

2. Agricultural apparatus according to Claim 1, *characterized in* **that** the said access device (12) extends at the rear of the said chassis (2), taking into account the direction of advance (A) and is linked to the said chassis (2) by means of a first articulation (18) with an axis substantially horizontal and perpendicular to the direction of advance (A).

3. Agricultural apparatus according to Claim 1 or 2, *characterized in* **that** when the difference between the distance (e) and the width (L1) of a working tool (4) is less than the width (L2) of the said access device (12), the said access device (12) extends in the folded position.

4. Agricultural apparatus according to any one of Claims 1 to 3, *characterized in* **that** in the folded position, the said access device (12) is locked and extends substantially above the said working tools (4).

5. Agricultural apparatus according to Claim 1 or 2, *characterized in* **that** when the difference between the distance (e) and the width (L1) of the working tool (4) is greater than the width (L2) of the said access device (12), the access device (12) extends in its open position and substantially between two adjacent working tools (4).

6. Agricultural apparatus according to any one of Claims 1 to 5, *characterized in* **that** the adjustment of the distance (e) between the said working tools (4) is carried out by means of at least one jack.

7. Agricultural apparatus according to Claim 6, *characterized in* **that** it comprises a safety device which blocks the retraction of the said jack(s) when the access device (12) is in the open position.

8. Agricultural apparatus according to any one of Claims 1 to 7, *characterized in* **that** the said width (L2) of the said access device (12) is less than the width (L1) of a working tool (4).

9. Agricultural apparatus according to any one of Claims 1 to 8, *characterized in* **that** to gain access to the storing hopper (9) when the said access device (12) is in the folded position, the said jack(s) is(are) extended to increase the distance (e) between the said working tools (4), then the said access device (12) is pivoted in its open position.

10. Agricultural apparatus according to any one of Claims 1 to 9, *characterized in* **that** it is a seeder.

## Patentansprüche

1. Landwirtschaftliches Gerät (1) mit einem Rahmen (2), Arbeitswerkzeugen (4), die auf dem Rahmen (2) in einem definierten und zwischen einem Mindest- und einem Höchstabstand einstellbaren Abstand (e) verteilt sind, einem Speichertrichter (9), der auf dem Rahmen (2) angeordnet ist, und einer Zugangsvorrichtung (12) zum Speichertrichter, wobei jedes Arbeitswerkzeug (4) einen Platzbedarf in der Breite (L1) hat und mindestens eine Einsetzvorrichtung (7, 10) umfasst, wobei die Zugangsvorrichtung (12) in mindestens einer Platte besteht, die ein Trittbrett mit einer Breite (L2) bildet, wobei sich die Zugangsvorrichtung (12) zwischen einer offenen Position, die den Zugang zum Speichertrichter (9) ermöglicht, und einer eingezogenen Position erstreckt, wobei die Zugangsvorrichtung (12) im Wesentlichen innerhalb des Platzbedarfs des landwirtschaftlichen Geräts (1) bleibt und *dadurch gekennzeichnet,* **dass** sich die Zugangsvorrichtung (12) zwischen zwei benachbarten Arbeitswerkzeugen (4) in ihrer offenen Position erstreckt.

2. Landwirtschaftliches Gerät nach Anspruch 1, *dadurch gekennzeichnet,* **dass** sich die Zugangsvorrichtung (12) am hinteren Teil des Rahmens (2) in Bezug zur Vorschubrichtung (A) erstreckt und mit dem Rahmen (2) mittels eines ersten Gelenks (18) mit einer im Wesentlichen horizontalen und auf die Vorschubrichtung (A) senkrechten Achse verbunden ist.

3. Landwirtschaftliches Gerät nach Anspruch 1 oder 2, *dadurch gekennzeichnet,* **dass,** wenn der Unterschied zwischen dem Abstand (e) und der Breite (L1) eines Arbeitswerkzeugs (4) geringer als die Breite (L2) der Zugangsvorrichtung (12) ist, sich die Zugangsvorrichtung (12) in der eingezogenen Position erstreckt.

4. Landwirtschaftliches Gerät nach irgend einem der Ansprüche 1 bis 3, *dadurch gekennzeichnet,* **dass** in der eingezogenen Position die Zugangsvorrichtung (12) verriegelt ist und sich im Wesentlichen über den Arbeitswerkzeugen (4) erstreckt.

5. Landwirtschaftliches Gerät nach Anspruch 1 oder 2, *dadurch gekennzeichnet,* **dass,** wenn der Unterschied zwischen dem Abstand (e) und der Breite (L1) des Arbeitswerkzeugs (4) größer als die Breite (L2) der Zugangsvorrichtung (12) ist, sich die Zugangsvorrichtung (12) in ihrer offenen Position und im Wesentlichen zwischen zwei benachbarten Arbeitswerkzeugen (4) erstreckt.

6. Landwirtschaftliches Gerät nach irgend einem der Ansprüche 1 bis 5, *dadurch gekennzeichnet,* **dass** die Einstellung des Abstands (e) zwischen den Arbeitswerkzeugen (4) mittels mindestens eines Zylinders erfolgt.

7. Landwirtschaftliches Gerät nach Anspruch 6, *dadurch gekennzeichnet,* **dass** es eine Sicherheit umfasst, die das Einziehen des (der) Zylinder(s) blockiert, wenn sich die Zugangsvorrichtung (12) in der offenen Position befindet.

8. Landwirtschaftliches Gerät nach irgend einem der Ansprüche 1 bis 7, *dadurch gekennzeichnet,* **dass** die Breite (L2) der Zugangsvorrichtung (12) geringer als die Breite (L1) eines Arbeitswerkzeugs (4) ist.

9. Landwirtschaftliches Gerät nach irgend einem der Ansprüche 1 bis 8, *dadurch gekennzeichnet,* **dass** für den Zugang zum Speichertrichter (9), wenn sich die Zugangsvorrichtung (12) in der eingezogenen Position befindet, der (die) Zylinder ausgefahren ist(sind), um den Abstand (e) zwischen den Arbeitswerkzeugen (4) zu vergrößern, wobei sodann die Zugangsvorrichtung (12) in ihre offene Position geschwenkt wird.

10. Landwirtschaftliches Gerät nach irgend einem der Ansprüche 1 bis 9, *dadurch gekennzeichnet,* **dass** es sich um eine Sämaschine handelt.

**Fig. 1**

EP 2 050 324 B1

**Fig. 2**

EP 2 050 324 B1

**Fig. 3**

EP 2 050 324 B1

Fig. 4

**EP 2 050 324 B1**

**RÉFÉRENCES CITÉES DANS LA DESCRIPTION**

**Documents brevets cités dans la description**

- FR 0906

- DE 19607618